# NEUE EUROPÄISCHE PATENTSCHRIFT

(11) **EP 3 530 432 B2**
(45) Veröffentlichungstag und Bekanntmachung des Hinweises auf die Entscheidung über den Einspruch: **02.12.2026**
(45) Hinweis auf die Patenterteilung: 04.10.2023
(21) Anmeldenummer: 19157930.9
(22) Anmeldetag: 29.07.2010
(51) Int. Cl.: B29C 49/42, B29C 49/48, B29C 33/30

(54) **SCHNELLWECHSELMECHANISMUS FÜR BODENTEILE**
QUICK SWAP MECHANISM FOR BASE PARTS
MÉCANISME DE CHANGEMENT RAPIDE POUR PARTIES DE FOND

(30) Priorität: 31.07.2009 DE 102009035871
(43) Veröffentlichungstag der Anmeldung: 28.08.2019
(62) Dokumentnummer(n) der früheren Anmeldung(en) nach Art. 76 EPÜ: 10171181.0 / 2 279 849
(73) Patentinhaber: Krones AG, 93073 Neutraubling (DE)
(72) Erfinder: Stoiber, Christian, 93073 Neutraubling (DE); Philipp, Thomas, 93073 Neutraubling (DE); Effenberger, Harald, 93073 Neutraubling (DE)
(74) Vertreter: Grünecker Patent- und Rechtsanwälte PartG mbB

(56) Entgegenhaltungen:
- EP-A2- 2 080 606
- EP-A2- 2 080 606
- EP-A2- 2 279 849
- EP-B1- 1 299 223
- WO-A1-2008/009808
- WO-A1-2009/090325
- WO-A2-2008/000938
- DE-A1- 102004 045 405
- DE-A1- 102007 022 638
- DE-A1- 102009 039 695
- DE-A1- 102009 039 699
- DE-A1- 19 925 756
- DE-A1- 3 228 434
- DE-A1- 3 228 434
- DE-U1- 202008 016 838
- FR-A1- 2 720 680
- FR-A1- 2 833 872
- FR-A1- 2 902 688
- FR-A1- 2 903 932
- US-A1- 2004 052 892
- US-A1- 2006 078 643
- US-A1- 2008 063 742
- US-A1- 2008 181 982
- US-A1- 2008 181 982

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt und weisen dabei üblicherweise eine Vielzahl von Blasstationen auf, welche an einem Trägerrad angeordnet sind, und welche zur Umformung von Kunststoffvorformlingen zu Kunststoffbehältnissen mittels Blasumformung dienen.

Dabei weisen derartige Blasstationen üblicherweise zwei Formteile auf, die gemeinsam mit einem Bodenteil einen Hohlraum begrenzen, innerhalb dessen die Kunststoffvorformlinge expandiert werden. Bei einem Garniturenwechsel ist es erforderlich, die Bodenteile auszutauschen. Dabei sind im Stand der Technik die Bodenteile üblicherweise an einem Träger angeschraubt, und müssen daher bei einem Montagewechsel relativ aufwendig demontiert werden. Weiterhin ist es jedoch gefordert, dass die Bodenteile stabil gegenüber ihren jeweiligen Trägern angeordnet sind.

Aus der EP 1 299 223 B1 ist eine Vorrichtung zur Blasformung von Behältern bekannt. Dabei ist ein Bodeneinsatz vorgesehen, der mit einer Positioniereinrichtung verbunden ist. Zur Verbindung wird dabei ein Kupplungsprofil verwendet, dass aus einem mit einer Grundplatte verbundenem Kopplungselement sowie einem mit dem Bodenelement verbundenen Gegenelement ausgebildet ist und von einem Handhebel betätigbar ist, um ein entsprechendes Lösen des Bodeneinsatzes zu bewirken.

Die US 5,750,161 beschreibt einen Schnellwechselmechanismus für eine Blasformeinrichtung. Dabei sind ein erstes und ein zweites Verschließelement vorgesehen wobei das zweite Verschließelement beweglich zwischen einer mit dem ersten Schließelement verschlossenen Position und einer gelösten Position angeordnet ist.

EP2080606A2 offenbart eine Vorrichtung zum Umformen von Kunststoffvorformlingen in Kunststoffbehältnisse mit einer Blasstation, welche einen Hohlraum aufweist, innerhalb dessen die Kunststoffvorformlinge zu den Kunststoffbehältnissen expandierbar sind, wobei die Blasstation ein Bodenteil aufweist, welches den Hohlraum begrenzt und wobei das Bodenteil lösbar mittels eines Befestigungsmechanismus an einem Träger angeordnet ist, wobei die Vorrichtung einen Zuführanschluss zum Zuführen eines fließfähigen Temperiermediums und einen Abführanschluss zum Abführen des fließfähigen Temperiermediums aufweist sowie ein Zuführelement, um dem Zuführanschluss das fließfähige Medium zuzuführen und ein Abführelement um das Temperiermedium vom Abführanschluss abzuführen.

Die Erfindung ist in Anspruch 1 definiert.

Vorteilhafte Ausführungsformen und Weiterbildungen sind Gegenstand der Unteransprüche.

Eine Vorrichtung zum Umformen von Kunststoffvorformlingen in Kunststoffbehältnisse weist wenigstens eine Blasstation auf, welche - insbesondere ein einem geschlossenen Zustand -, einen Hohlraum aufweist bzw. ausbildet, innerhalb dessen die Kunststoffvorformlinge zu den Kunststoffbehältnissen expandierbar sind. Dabei weist die Blasstation ein Bodenteil auf, welches den Hohlraum begrenzt, wobei das Bodenteil lösbar mittels eines Befestigungsmechanismus an einem Träger angeordnet ist.

Der Befestigungsmechanismus weist wenigstens einen an einem ersten Befestigungselement angeordneten stiftartigen Körper auf, der in einem befestigten Zustand des Bodenteils an einem Träger in eine in einem zweiten Befestigungselement angeordnete Nut eingreift, wobei der stiftartige Körper zum Befestigen des Bodenteils gegenüber dem Träger in der Nut bzw. gegenüber der Nut verschiebbar ist und die Nut derart beschaffen ist, dass ein Endabschnitt des stiftartigen Körpers die Nut in einem ersten Bereich der Nut passieren kann und die Nut in einem zweiten Bereich der Nut nicht passieren kann.

Es wird damit ein Befestigungsmechanismus vorgeschlagen, wobei zwischen einem geöffneten und einem gelösten Zustand die beiden Befestigungselemente gegeneinander bewegt, beispielsweise gegeneinander verdreht werden. Durch dieses Verdrehen wird der stiftartige Körper gegenüber der Nut und damit gegenüber dem zweiten Befestigungselement arretiert. Durch diese Arretierung entsteht ein Verschluss des Bodenteils an seinem Träger. Vorteilhaft ist der stiftartige Körper fest bzw. nur in einer bestimmten Richtung beweglich gegenüber dem Bodenteil angeordnet. Insbesondere ist der stiftartige Körper in Richtung einer Drehbewegung des Bodenteils gegenüber dem Träger fest gegenüber dem Bodenteil angeordnet.

Der stiftartige Körper kann an seinem Außenumfang wenigstens eine Ausnehmung aufweisen.

Dies bedeutet, dass der stiftartige Körper in dem Bereich dieser Ausnehmung einen geringeren Querschnitt aufweist. Vorzugsweise ist diese Ausnehmung umlaufend ausgebildet.

Diese Ausnehmung ist vorteilhaft hinsichtlich ihres Querschnitts derart beschaffen, dass sie vollständig innerhalb der oben besagten Nut, die an einem zweiten Befestigungselement angeordnet ist, verschoben werden kann. Damit greift diese Ausnehmung in die Nut bzw. in die Ränder der Nut ein und der stiftartige Körper kann auf diese Weise in einem zweiten Bereich der Nut in seiner Längsrichtung im Wesentlichen nicht mehr gegenüber der Nut bewegt werden.

Das Bodenteil kann an einem Adapterelement angeordnet werden und das Adapterelement ist über den Befestigungsmechanismus an dem Träger angeordnet. Mittels dieses Adapterelements können unterschiedliche Höhenbewegungen des Bodenteils gegenüber der Blasstation bzw. gegenüber den Seitenteilen ausgeglichen werden.

Der wenigstens eine stiftartige Körper kann in Verbindung mit dem Bodenteil stehen.

Dabei ist es möglich, dass der stiftartige Körper unmittelbar an dem Bodenteil angeordnet ist, es wäre jedoch auch möglich, dass der stiftartige Körper an dem oben erwähnten Adapterelement angeordnet ist und dieses Adapterelement wiederum an dem Bodenteil. Auch auf diese Weise ist der stiftartige Körper in (mittelbarer) Verbindung mit dem Bodenteil.

Das Befestigungselement kann drehbar gegenüber dem Bodenteil angeordnet werden.

Dabei ist es möglich, dass zum Lösen des Bodenteils das Befestigungselement um eine vorgegebene Drehachse gedreht wird, es wäre jedoch auch möglich, dass das Bodenteil selbst gedreht wird um dessen Lösung zu erreichen.

Die Vorrichtung kann wenigstens ein Federelement zum Vorspannen des stiftartigen Körpers gegenüber dem ersten Befestigungselement aufweisen. Es kann sich bei dem Befestigungselement um das oben erwähnte Adapterelement handeln.

In diesem Fall wird der stiftartige Körper gegenüber dem Befestigungselement vorgespannt und bevorzugt auf dieses erste Befestigungselement zu vorgespannt.

Es ist vorteilhaft in wenigstens einer Nut eine schräge Führungsfläche vorgesehen, welche bewirkt dass bei einer Relativbewegung des stiftartigen Körpers gegenüber der Nut in Richtung der Nut der stiftartige Körper in seiner Längsrichtung bewegt wird. Auf diese Weise ist es, insbesondere in Verbindung mit dem oben erwähnten Federelement möglich, dass bei einer Drehung beispielsweise des ersten Befestigungselements der stiftartige Körper entgegen der Federwirkung belastet und auf diese Weise das Bodenteil an dem Träger angespannt wird.

Es ist vorteilhaft in wenigstens einer Nut eine Rastfläche ausgebildet, in der ein Bereich des stiftartigen Körpers in einer vorgegebenen Relativstellung zwischen der Nut und dem stiftartigen Körper einrastet. Vorzugsweise handelt es sich bei dieser Relativstellung um einen vollständig montierten Zustand so dass ein Einrasten in diesem Zustand erfolgt. Bei dieser Rastfläche kann es sich beispielsweise um eine horizontal verlaufende Fläche handeln, es wäre jedoch auch möglich, dass die Rastfläche als (geringfügige) Ausnehmung ausgebildet ist, in die ein Bereich des stiftartigen Körpers einrastet (beispielsweise den Endabschnitt). Auch könnte ein entsprechender Rastmechanismus durch das Vorsehen von Kugeln in Laufflächen oder dergleichen erreicht werden.

Das erste Befestigungselement ist vorteilhaft drehbar um eine vorgegebene Drehachse angeordnet. Vorteilhaft erstrecken sich in diesem Fall die oben genannten Nuten zumindest teilweise und bevorzugt vollständig in der Umfangsrichtung des Befestigungselementes. Durch die Drehung des Befestigungselements kann auf diese Weise ein Lösen des Bodenteils erreicht werden. Vorteilhaft ist an dem Befestigungselement ein Hebel angeordnet, mit dessen Hilfe der Benutzer eine Verdrehung des ersten Befestigungselements erreichen kann.

Es ist zwischen dem ersten Befestigungselement und dem zweiten Befestigungselement in einem montierten Zustand des Bodenteils ein Tragekörper vorteilhaft angeordnet. So ist es möglich, dass der Tragekörper selbst ruhend angeordnet ist und auf diesem Tragekörper das Bodenteil aufgesetzt wird. Durch eine Verdrehung des zweiten Befestigungselements kann das Bodenteil gegenüber dem Träger arretiert werden, ohne dabei selbst gedreht werden zu müssen. Bevorzugt erstrecken sich der oder die stiftartigen Körper durch den Tragekörper hindurch. Dieser Tragekörper dient vorteilhaft zum Zentrieren des Bodenteils.

Die Vorrichtung weist vorteilhaft wenigstens zwei zueinander beabstandete stiftartige Körper auf. Entsprechend sind bevorzugt auch wenigstens zwei Nuten vorgesehen, in denen die beiden stiftartigen Körper verlaufen. Auf diese Weise wird eine besonders stabile Arretierung des Bodenteils ermöglicht.

Vorzugsweise sind die beiden stiftartigen Körper bezüglich einer Drehachse des zweiten Befestigungselements einander gegenüberliegend angeordnet. Auch die Nuten sind vorteilhaft punktsymmetrisch bezüglich einer Drehachse angeordnet.

Es sind vorteilhaft innerhalb des ersten Befestigungselements Kanäle zum Leiten eines fließfähigen Mediums vorgesehen. Bei diesem fließfähigen Medium kann es sich dabei insbesondere um eine Kühlflüssigkeit zum Kühlen des Bodenteils handeln. Auch in dem Bodenteil selbst könnten dabei entsprechende Kühlkanäle vorgesehen sein.

Das Vorsehen dieser Kanäle zum Leiten eines fließfähigen Mediums erleichtert auch die Schnellmontage des Bodenteils, da auf diese Weise nicht nur das Bodenteil selbst schnell montiert werden kann sondern zugleich auch die nötigen Kühlflüssigkeitsverbindungen hergestellt bzw. geschlossen werden können.

Vorteilhaft sind daher an dem ersten Befestigungselement Flüssigkeitsanschlüsse angeordnet, die sich in einer Längsrichtung des stiftartigen Körpers erstrecken. Auf diese Weise können beim Aufsetzen des Bodenteils an das zweite Befestigungselement auch die Flüssigkeitsanschlüsse in entsprechende Kupplungen hineingeschoben werden, so dass in einem Arbeitsgang auch die Kühlflüssigkeitsverbindung hergestellt wird.

Die Vorrichtung weist einen Zuführanschluss zum Zuführen eines fließfähigen Temperiermediums und einen Abführanschluss zum Abführen des fließfähigen Temperiermediums auf sowie ein Zuführelement, um dem Zuführanschluss das fließfähige Medium zuzuführen und ein Abführelement um das Temperiermedium vom Abführanschluss abzuführen. Dabei ist wenigstens das Zuführelement von dem Zuführanschluss oder das Abführelement von dem Abführanschluss automatisiert trennbar. Es wird erfindungsgemäß vorgeschlagen, dass bei einem Wechsel der Blasformen bzw. der Bodenformen auch die Medienanschlüsse automatisiert zumindest entriegelt werden.

Es wird das Temperiermedium zum Temperieren der Bodenform bzw. des Bodenteils eingesetzt, so dass vorteilhaft in der Bodenform und/oder dem Bodenteil auch Kanäle zum Leiten des Temperiermediums verlaufen.

Die vorliegende Erfindung ist daher auch auf eine Vorrichtung zum Umformen von Kunststoffvorformlingen in Kunststoffbehältnisse mit wenigstens einer Blasstation gemäß Anspruch 1 gerichtet, welche einen hohen Hohlraum aufweist, innerhalb dessen die Kunststoffvorformlinge zu den Kunststoffbehältnissen expandierbar sind, wobei die Blasstation ein Bodenteil aufweist, welches den Hohlraum begrenzt und wobei das Bodenteil lösbar mittels eines Befestigungsmechanismus an einem Träger angeordnet ist. Bei dieser erfinderischen Ausgestaltung sind hier zusätzlich die oben erwähnten Zuführ- und Abführanschlüsse sowie die Zuführelemente und die Abführelemente für das fließfähige Temperiermedium vorgesehen und wenigstens das Zuführelement oder das Abführelement sind automatisiert von dem Zuführanschluss oder dem Abführanschluss trennbar.

Im bisherigen Stand der Technik müssen bei einem Wechsel der Blasformen mittels Formwechselstationen die Bodenformen und die Medienanschlüsse per Hand entriegelt und anschließend wieder verriegelt werden. Dieses Ent- und Verriegeln der Formböden muss manuell erfolgen und kostet dabei Zeit. Vorzugsweise kann mithilfe einer integrierten Einheit in dem Formenwechsler und an der Blasformstation diese Ent- und Verriegelung und das An- und Abkoppeln der Medienanschlüsse an der Bodenform automatisiert werden und auf diese Weise Zeit beim Wechselvorgang gespart werden. Die erwähnten Temperiermedien dienen dazu, um die Bodenform zu temperieren, beispielsweise die Innenwandung der Bodenform mit einer gewünschten Temperatur zu beaufschlagen. So ist insbesondere eine Kühlung der Bodenform möglich.

Bevorzugt sind sowohl das Zuführelement von dem Zuführanschluss als auch das Abführelement von dem Abführanschluss automatisiert trennbar. Unter automatisiert wird hierbei verstanden, dass die Trennung und bevorzugt auch das Verbinden der jeweiligen Anschlüsse wenigstens teilweise ohne manuellen Eingriff erfolgen. Vorteilhaft erfolgen die Trennung und/oder die Verbindung während oder durch eine Bewegung der einzelnen Blasstationen und besonders bevorzugt während eines speziellen Montagebetriebs der Anlage.

Erfindungsgemäß sind das Zuführelement und das Abführelement an einem gemeinsamen bewegbaren Träger angeordnet. Durch eine Bewegung dieses gemeinsamen Trägers können die Medienanschlüsse getrennt oder verbunden werden. Vorteilhaft sind Ventileinrichtungen vorgesehen, welche bewirken, dass beispielsweise bei einem Trennen des Zuführelements vom Zuführanschluss und/ oder des Abführelements vom Abführanschluss ein Auslaufen von Flüssigkeit aus dem Bodenteil verhindert wird.

Erfindungsgemäß weist die Vorrichtung eine Führungskurve zum Trennen des Zuführelements von dem Zuführanschluss und/ oder zum Trennen des Abführelements von dem Abführanschluss auf. So ist es möglich, dass beim Einfahren der Blasstationen in einen Formenwechsler mittels einer Kurve, beispielsweise ein Schieber, der mit einer Rolle ausgestattet ist, die Bodenform entriegelt. Anschließend können über eine weitere Kurve und eine weitere Einheit mit einer Rolle, die vorteilhaft an der Blasstation verbaut ist, die Medienanschlüsse des Formbodens automatisch abgekoppelt werden. Nach diesem Vorgang kann die Bodenform ausgetauscht werden.

Ein Verriegeln und ein Ankoppeln der Bodenform (bzw. deren Medienverbindungen) wird beim Ausfahren des Formenwechslers vorteilhaft über zwei weitere Kurven automatisch ausgeführt. Auf diese Weise ist es möglich, Bedienungsfehler des Personals, z. B. eine nicht korrekte Verriegelung oder Ankopplung, auszuschließen.

Vorteilhaft weist die Vorrichtung wenigstens eine Führungskurve auf, um das erste Befestigungselement bzw. die Bodenform (insbesondere gegenüber anderen Bestandteilen der Blasform und/oder einem Träger) zu verriegeln oder zu entriegeln. Vorteilhaft ist eine Führungskurve zum Verriegeln der Bodenform vorgesehen und eine weitere Führungskurve zum entriegeln, wobei besonders bevorzugt beide Führungskurven zustellbar sind. Es wäre jedoch auch möglich, dass das Verriegeln bzw. Entriegeln über andere Mechanismen wie beispielsweise elektrische, pneumatische und/oder hydraulische Antriebe erfolgt.

Es wird darauf hingewiesen, dass die hier beschriebene Kopplung und Entkopplung dieser Medienanschlüsse auch bei bestehenden Anlagen nachgerüstet werden kann.

Der Befestigungsmechanismus kann wenigstens einen an einem ersten Befestigungselement angeordneten stiftartigen Körper aufweisen, der in einem befestigten Zustand des Bodenteils an einem Träger in eine in einem zweiten Befestigungselement angeordnete Nut eingreift, wobei der stiftartige Körper zum Befestigen des Bodenteils gegenüber dem Träger in der Nut verschiebbar ist und die Nut derart beschaffen ist, dass ein Endabschnitt des stiftartigen Körpers die Nut in einem ersten Bereich der Nut passieren kann und die Nut in einem zweiten Bereich der Nut nicht passieren kann. Der hier beschriebene Schnelllösemechanismus kann auch nachträglich an bestehenden Anlagen angeordnet werden.

Weitere Vorteile und Ausführungsformen ergeben sich aus den beigefügten Zeichnungen:
Darin zeigen:
- Fig. 1: eine perspektivische Teilansicht einer Blasstation einer erfindungsgemäßen Vorrichtung;
- Fig. 2: eine Detailansicht eines Verriegelungsmechanismuses für ein Bodenteil;
- Fig. 3: eine weitere Ansicht der in Fig. 2 gezeigten Darstellung;
- Fig. 4: die Vorrichtung aus Fig. 1 mit befestigtem Adapterelement;
- Fig. 5: einen Schnitt durch die in Fig. 4 gezeigte Darstellung;
- Fig. 6: eine weitere Schnittdarstellung einer Vorrichtung;
- Fig. 7: eine weitere teilgeschnittene Darstellung einer Vorrichtung;
- Fig. 8: eine Detaildarstellung eines Befestigungsmechanismus;
- Fig. 9a, 9b: zwei Darstellungen eines zweiten Befestigungselements;
- Fig. 10a-10c: drei Darstellungen zur Veranschaulichung der automatisierten (Ent)Kopplung der Medienzuführung und Ver- bzw. Entriegelung der Bodenform; und
- Fig. 11a, 11b: zwei weitere Darstellungen zur Veranschaulichung der automatisierten (Ent)Kopplung der Medienzuführung und Ver- bzw. Entriegelung der Bodenform.

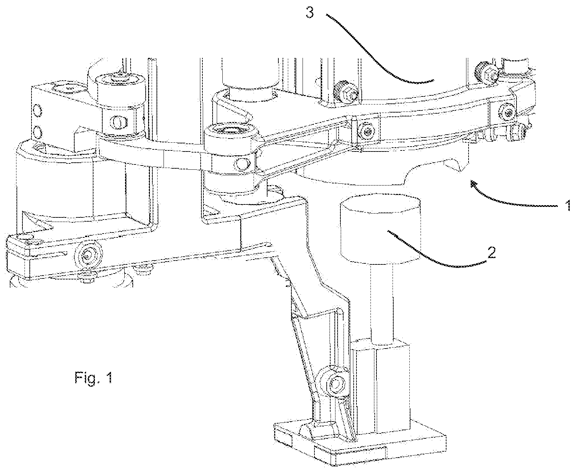

Fig. 1 zeigt eine Teildarstellung einer

Blasstation 1. Diese Blasstation 1 weist dabei (nur teilweise dargestellte) Seitenteile 3 auf, welche gemeinsam mit einem (schematisch dargestellten) Bodenteil 2 einen (nicht gezeigten) Hohlraum begrenzen. Das Bezugszeichen 1 kennzeichnet dabei die Blasstation in ihrer Gesamtheit. Eine erfindungsgemäße Vorrichtung kann dabei eine Vielzahl von Blasstationen aufweisen, die beispielsweise an einem gemeinsamen Trägerrad angeordnet sein können.

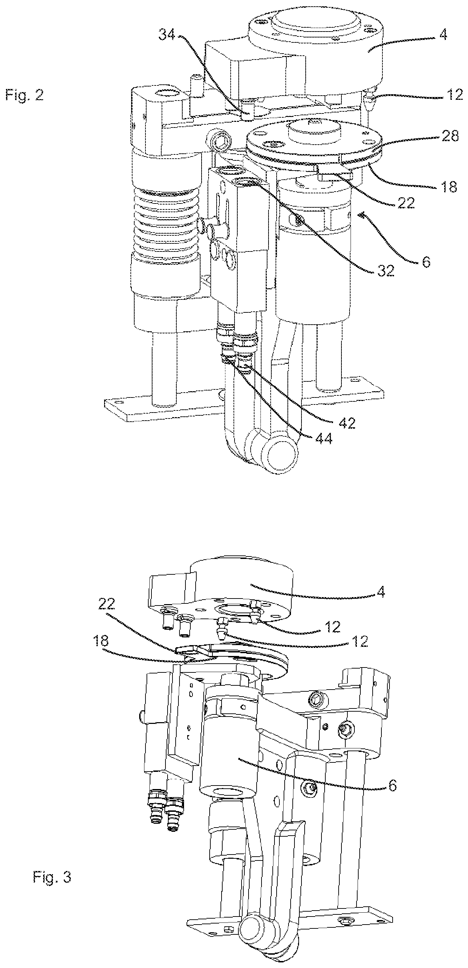

Fig. 2 zeigt eine erste Darstellung zur Veranschaulichung des Befestigungsmechanismuses. Dabei ist hier ein Adapterelement 4 vorgesehen, an dem wiederum das (nicht gezeigte) Bodenteil befestigt wird. An diesem Adapterelement sind zwei stiftartige Körper 12 vorgesehen, wobei jedoch nur ein stiftartiger Körper 12 sichtbar ist. Weiterhin ist an dem Adapterelement 4 ein Anschluss 34 vorgesehen, der zur Versorgung der innerhalb des Adapterelements 4 liegenden Kühlmittelleitung mit Flüssigkeit und insbesondere Wasser dient. Das Adapterelement 4 ist hier gleichzeitig auch das erste Befestigungselement im Sinne der obigen Beschreibung. Das Bezugszeichen 18 bezieht sich auf das zweite Befestigungselement bei dem es sich hier um eine Verriegelungsscheibe handelt, die um einen feststehenden Zylinderbolzen drehbar gelagert ist.

Das Bezugszeichen 28 bezieht sich auf einen Tragekörper, der in einem montierten Zustand zwischen dem Adapterelement 4 und dem zweiten Befestigungselement 18 angeordnet ist. Das Bezugszeichen 22 kennzeichnet einen Hebel, um das zweite Befestigungselement 18 zu drehen. Das Bezugszeichen 6 kennzeichnet in seiner Gesamtheit den Träger, an dem das Bodenteil angeordnet ist.

An dem Träger ist wiederum vorteilhaft fest der Tragekörper 28 angeordnet. Das Bezugszeichen 32 bezieht sich auf Kupplungen, in welche die Anschlüsse 34 in einer Längsrichtung L der stiftartigen Körper 12 eingeführt werden.

Fig. 3 zeigt eine weitere Ansicht der in Fig. 2 gezeigten Vorrichtung. Man erkennt hier insbesondere auch wieder das zweite Befestigungselement 18, welches drehbar angeordnet ist. Auch sind in Fig. 3 die beiden stiftartigen Körper 12 zu erkennen welche zur Arretierung des Adapterelements gegenüber dem zweiten Befestigungselement 18 dienen.

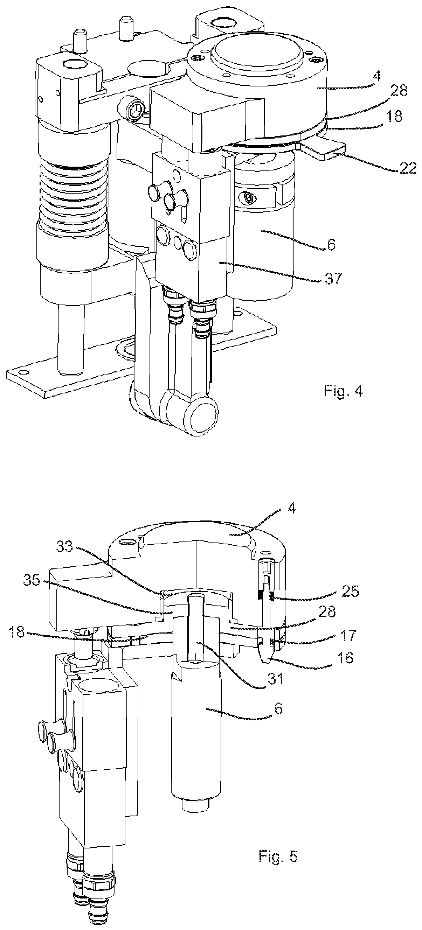

Fig. 4 zeigt die Darstellung aus den Fig. 2 und 3 wobei hier das Adapterelement mit dem zweiten Befestigungselement 18 verriegelt ist. Bei dieser Darstellung sind auch die Anschlüsse 34 in einen Flüssigkeitsverteilkörper 37 eingeschoben.

Fig. 5 zeigt eine Schnittdarstellung der in Fig. 4 gezeigten Vorrichtung. Man erkennt, dass an dem Träger 6 über einen Stift bzw. eine Verbindungsstange 31 der Trägekörper 28 drehfest angeordnet ist. Dieser Tragekörper 28 weist dabei einen Vorsprung 35 auf, der einerseits in eine Ausnehmung 33 des ersten Befestigungselements 4 bzw. Adapterelements 4 eingreift und der andererseits auch einen Vorsprung bzw. eine Hülse 43 aufnimmt. Weiterhin sind hier Federelemente 25 vorgesehen, mit deren Hilfe der stiftartige Körper 12 in Fig. 5 nach oben in d. h. in Richtung des Adapterelements 4 vorgespannt wird. Das Bezugszeichen 16 kennzeichnet einen sich nach unten hin verjüngenden Endabschnitt des stiftartigen Körpers 12 und das Bezugszeichen 17 eine umlaufende Ausnehmung, welche, wie unten erläutert wird, zum Eingreifen in die Nuten des zweiten Befestigungselements 18 dient.

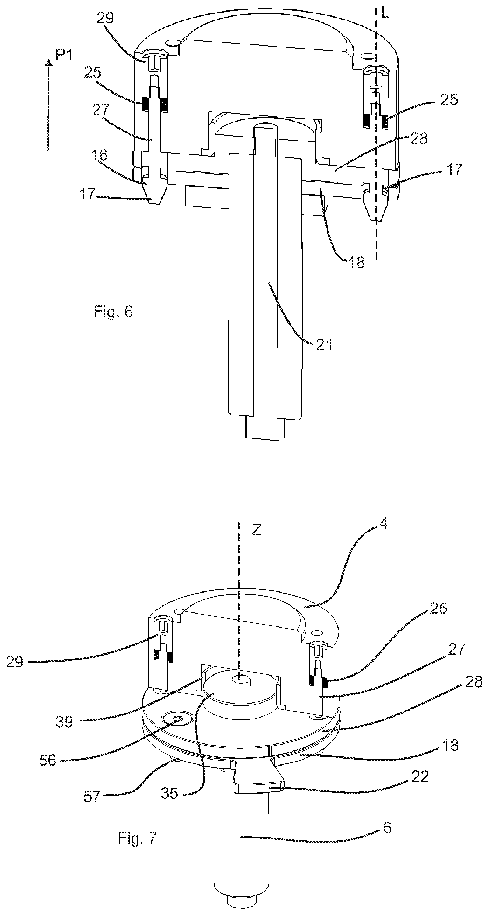

Fig. 6 zeigt eine weitere Schnittdarstellung der in Fig. 5 gezeigten Vorrichtung. Man erkennt hier wiederum die Ausnehmung 17, welche in die entsprechenden Nuten des zweiten Befestigungselements 18 eingreifen. Das Bezugszeichen 29 bezieht sich auf einen Kopf, der hier fest an einem Stangenelement 27 des stiftartigen Körpers 12 angeordnet ist. Dabei ist es möglich, dass dieser Kopf 29 gegenüber dem Stangenelement 27 gedreht wird und auf diese Weise die Federkraft, welche auf den stiftartigen Körper 12 wirkt und diesen nach oben (Pfeil P1) drängt, eingestellt werden kann. Im Adapterelement 4 ist eine entsprechende Ausnehmung vorgesehen, welche den Kopf 29 aufnimmt. Das Bezugszeichen 31 kennzeichnet wiederum die Verbindungsstange, an der der Tragekörper 28 angeordnet ist. Das Bezugszeichen L kennzeichnet dabei die Längsrichtung des stiftartigen Körpers. Diese ist parallel zu der Achse Z.

Fig. 7 zeigt eine weitere Darstellung der in Fig. 6 gezeigten Vorrichtung. Man erkennt hier auch eine umlaufende Hülse 39, welche den Vorsprung 35 gegenüber der Ausnehmung 33 abstützt. Das Bezugszeichen Z bezieht sich auf eine Achse, um welche das zweite Befestigungselement 18 drehbar ist. In Richtung dieser Achse kann das Adapterelement 4 auch auf den Tragekörper 28 aufgesetzt werden.

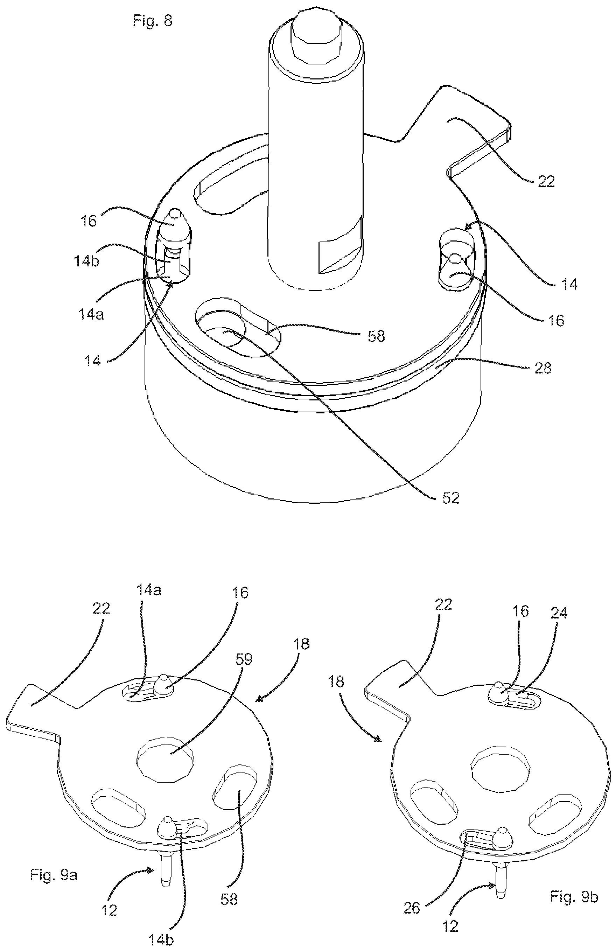

Fig. 8 zeigt eine Detaildarstellung des Befestigungsmechanismus von unten. Man erkennt, dass das zweite Befestigungselement bzw. die Verriegelungsscheibe zwei in Kreis- bzw. in Umfangsrichtung laufende Nuten 14 aufweist. Das Bezugszeichen 52 bezieht sich auf eine Öffnung, die in dem Tragekörper 28 angeordnet ist, und die zur Einführung eines Schraubkörpers 57 (vgl. Fig. 7) dient.

Die Fig. 9a und 9b zeigen das zweite Befestigungselement 18 in zwei unterschiedlichen Stellungen gegenüber den stiftartigen Körpern 12. Man erkennt wiederum, dass das zweite Befestigungselement bzw. die Verriegelungsscheibe die beiden Nuten 14 aufweist in denen sich eine Schrägfläche 24 bzw. eine schiefe Ebene befindet. Weiterhin erkennt man die stiftartigen Körper 12, die durch die Nut 14 hindurchgeschoben sind. Das in obigen Fig. gezeigte Adapterelement, an dem die beiden stiftartigen Körper, die hier als Zentrier- oder Verriegelungsstifte dienen, angeordnet sind, wird auf die Zentrierscheibe bzw. das zweite Befestigungselement 18 aufgesetzt.

Dabei erfolgt mittels des stiftartigen Körper 12 zunächst eine Ausrichtung des Bodenteils 2 bzw. des Adapterelements 4, da diese Stifte durch die Bohrungen des Tragekörpers 28 geführt werden müssen. Damit dient hier der Tragekörper 28 auch als Zentrierelement. Weiterhin werden im Wesentlichen zeitgleich die stiftartigen Körper bzw. Verriegelungs- und Zentrierstifte durch die Verriegelungsscheibe bzw. das in Fig. 9a und 9b gezeigte zweite Befestigungselement 18 geschoben. Zum Verspannen des Adapterelements 4 wird, wie oben erwähnt, das zweite Befestigungselement 18 um einen gewissen Winkel im Uhrzeigersinn gedreht. Dabei werden mittels der schiefen Ebene 24 die stiftartigen Körper weiter vorgespannt und das Adapterelement 4, auf dem sich dann ein (nicht gezeigtes) Bodenteil befinden kann ausreichend fixiert und verspannt.

Die Endlage des zweiten Befestigungselements bzw. Verriegelungsscheibe wird über eine Rasterung 26 signalisiert bzw. gehalten. Ein Öffnen der Verriegelung erfolgt durch Verdrehen des zweiten Befestigungselements 18 in eine entgegen gesetzte Richtung. Auch hier wird das zweite Befestigungselement in der geöffneten Stellung mit Hilfe einer (nicht dargestellten) Rasterung gehalten. Die Öffnung 58 in dem weiteren Befestigungselement dient zum Durchführen des Schraubelementes 57, bzw. dessen Kopfes 56. Auch die Öffnung erlaubt dabei die Drehung des weiteren Befestigungselements um einen definierten Winkel. Mit Hilfe der Schraubelemente 57 wird der Tragekörper 28 in einer definierten Stellung angeschraubt.

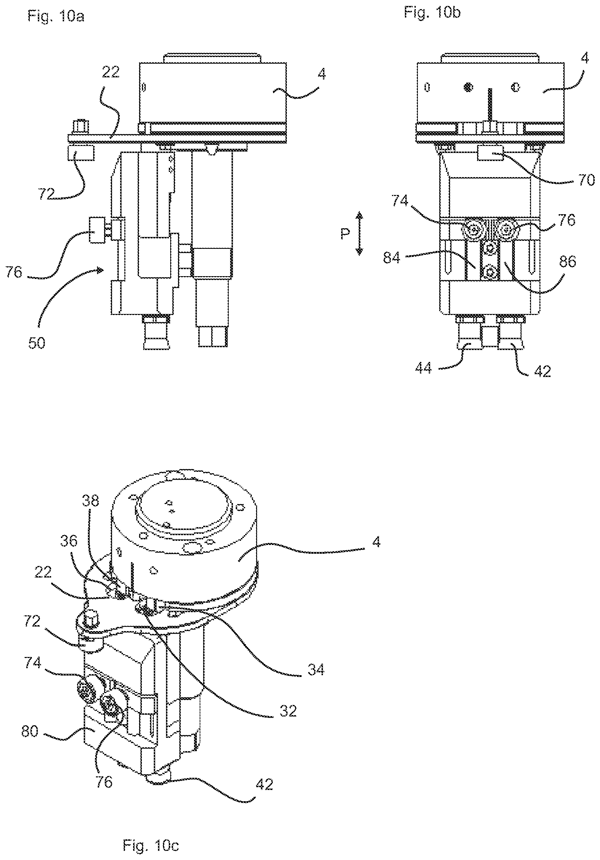

Die Fig. 10a bis 10c zeigen eine weitere Ausführungsform der erfindungsgemäßen Vorrichtung. Hier ist insbesondere die automatisierte Ent- bzw. Verriegelung der Bodenform und auch die automatisierte Be- und Entkopplung der Medienzuführung d.h. für das Temperiermedium dargestellt. Das Bezugszeichen 72 kennzeichnet eine Kurvenrolle, welche an dem Hebel 22 angeordnet ist, um ein automatisches Entriegeln des ersten Befestigungselements mittels einer Führungskurve zu erreichen. Das Bezugszeichen 50 kennzeichnet in seiner Gesamtheit eine Kopplungseinrichtung zum An- und Entkoppeln von Medien, insbesondere Temperiermedien. Zu diesem Zweck sind zwei Kurvenrollen 74 und 76 vorgesehen, welche innerhalb von Nuten 84 und 86 in der Richtung P verschiebbar sind. Diese Richtung P ist dabei parallel zu einer Längsrichtung der jeweiligen Blasformen bzw. auch zu einer Längsrichtung der jeweiligen Behältnisse. Es wäre jedoch auch eine Bewegung der Kurvenrollen 74 und 76 in einer hierzu senkrecht stehenden Richtung oder auch in anderen Richtungen denkbar.

Das Bezugszeichen 34 in Fig. 10c kennzeichnet einen Anschluss zum Zuführen eines Temperiermediums und das Bezugszeichen 38 einen entsprechenden Abführanschluss, um das Temperiermedium wieder abzuführen. Dieser Zuführanschluss 34 wirkt mit einem Zuführelement 32, welches beweglich ausgestattet ist, zusammen und der Abführanschluss 38 entsprechend mit einem Abführelement 36. Durch eine Bewegung der beiden Kurvenrollen 74 und 76 werden auch das Zuführelement 32 und das Abführelement 36 in Richtung des Doppelpfeils P bewegt. Das Bezugszeichen 80 kennzeichnet einen Träger, an dem die beiden Kurvenrollen 74 bewegbar gelagert sind. Die in Fig. 10b gezeigten Bezugszeichen 42 und 44 beziehen sich auf Hauptanschlüsse, um beispielsweise Schläuche für ein Temperiermedium anzuschließen.

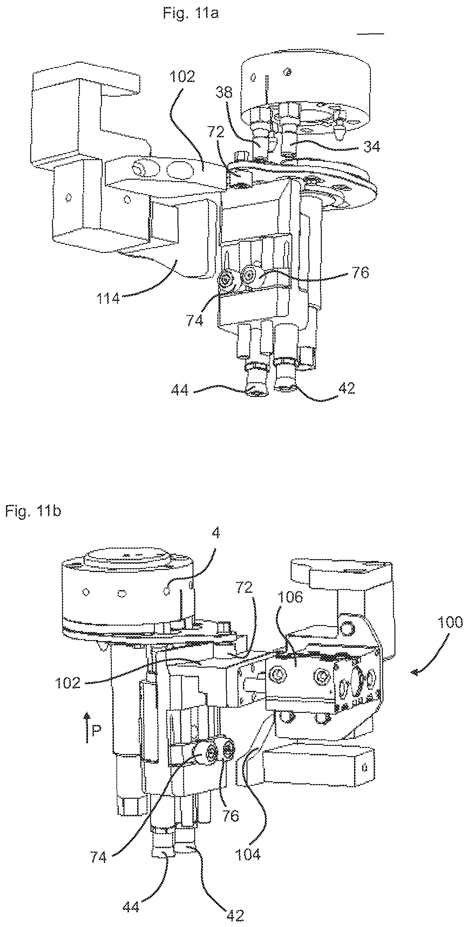

Fig. 11a zeigt eine Darstellung einer erfindungsgemäßen Vorrichtung. Dabei wird hier der Hebel 22 bzw. die Verriegelungsscheibe über eine Führungskurve 102 in die entriegelte Position gefahren, um die Bodenform 4 zu entriegeln. Über eine weitere Führungskurve kann eine entsprechende Verriegelung der Bodenform bzw. des Adapterelements 4 erreicht werden. Diese einzelnen Führungskurven sind dabei gegenüber einem Bewegungspfad der einzelnen Blasstationen stationär angeordnet.

Vorzugsweise werden anschließend die Medienanschlüsse über eine Einheit und eine Kurve 114 entkoppelt. Zu diesem Zweck werden die beiden Kurvenrollen 74 und 76 nach unten geschoben und auf diese Weise erfolgt ein Entkoppeln der Zuführ- und Abführanschlüsse (34, 38) von dem (nicht gezeigten) Zuführ- und Abführelementen. In Fig. 11b ist das entsprechende Einkoppeln dargestellt. Zu diesem Zweck ist eine weitere Führungskurve 104 vorgesehen, entlang derer die Kurvenrollen 74 und 76 entlang gleiten und auf diese Weise wieder in Richtung des Pfeils P nach oben geschoben werden. Die Führungskurve dient damit zum Verbinden der Zuführ- und Abführanschlüsse mit den Zuführ- und Abführelementen.

Die Führungskurve 104 und bevorzugt auch die Führungskurve 114 sowie die Führungskurve 102 sind dabei vorteilhaft zustellbar, wobei jeweils Antriebseinrichtungen vorgesehen sein können, um die Führungskurven 102, 104 und 114 speziell für einen Montagebetrieb zuzustellen um so eine Trennung bzw. Verbindung der Medienzu- und - abführung sowie eine Ent- bzw. Verriegelung der Bodenform 4 zu ermöglichen.

Das Bezugszeichen 106 kennzeichnet eine Ventileinrichtung, um die Führungskurve 102 zuzustellen, um auf diese Weise eine Verriegelung des Bodenteils zu ermöglichen. Bei der in Fig. 11b gezeigten Ausführungsform findet ebenfalls zunächst ein Verriegeln des Bodenteils statt und anschließend werden über die Kurve 104 auch die Medienanschlüsse 32, 34 bzw. 36, 38 verbunden. Das Bezugszeichen 100 kennzeichnet in seiner Gesamtheit den Zustellmechanismus für die einzelnen Führungskurven.

### Bezugszeichenliste

- 1: Blasstation
- 2: Bodenteil
- 3: Seitenteil
- 4: erstes Befestigungselement, Adapterelement,
- 5: Träger
- 12: stiftartiger Körper
- 14: Nut
- 14a: erster Bereich der Nut
- 14b: zweiter Bereich der Nut
- 16: verjüngender Endabschnitt
- 17: umlaufende Ausnehmung
- 18: zweites Befestigungselement
- 22: Hebel
- 24: Schrägfläche
- 25: Federelemente
- 26: Rastfläche
- 27: Stangenelement
- 29: Kopf
- 28: Tragekörper
- 31: Verbindungsstange
- 32: Kupplung, Zuführelement
- 33: Ausnehmung
- 34: Anschluss, Zuführanschluss
- 35: Vorsprung
- 36: Abführelement
- 37: Flüssigkeitsverteilkörper
- 38: Abführanschluss
- 39: umlaufende Hülse
- 42, 44: Hauptanschlüsse
- 50: Kopplungseinrichtung für Medienanschlüsse
- 52: Öffnung
- 57: Schraubkörper
- 58: Öffnung
- 72, 74, 76: Kurvenrollen
- 80: Träger
- 84, 86: Nuten
- 102, 104, 114: Kurven
- 100: Zustellmechanismus
- 106: Ventileinrichtung
- L: Längsrichtung
- P: Richtung
- P1: Pfeil
- Z: Achse

## Patentansprüche

1. Vorrichtung zum Umformen von Kunststoffvorformlingen in Kunststoffbehältnisse mit wenigstens einer Blasstation (1), welche einen hohen Hohlraum aufweist, innerhalb dessen die Kunststoffvorformlinge zu den Kunststoffbehältnissen expandierbar sind, wobei die Blasstation (1) ein Bodenteil (2) aufweist, welches den Hohlraum begrenzt und wobei das Bodenteil (2) lösbar mittels eines Befestigungsmechanismus (12, 14, 16, 18) an einem Träger (6) angeordnet ist,
wobei
die Vorrichtung einen Zuführanschluss (34) zum Zuführen eines fließfähigen Temperiermediums und einen Abführanschluss (38) zum Abführen des fließfähigen Temperiermediums aufweist sowie ein Zuführelement (32), um dem Zuführanschluss (34) das fließfähige Medium zuzuführen und ein Abführelement (36) um das Temperiermedium vom Abführanschluss (38) abzuführen, wobei wenigstens das Zuführelement (32) von dem Zuführanschluss (34) oder das Abführelement (36) von dem Abführanschluss (38) automatisiert trennbar ist, wobei das Zuführelement (32) und das Abführelement (36) an einem gemeinsamen Träger angeordnet ist, sodass durch eine Bewegung dieses gemeinsamen Trägers die Medienanschlüsse trennbar oder verbindbar sind
wobei
die Vorrichtung eine Führungskurve (114) zum Trennen des Zuführelements (32) von dem Zuführanschluss (34) und/oder zum Trennen des Abführelements (36) von dem Abführanschluss (38) aufweist.

2. Vorrichtung nach Anspruch 1,
**dadurch gekennzeichnet, dass**
das Temperiermedium zum Temperieren des Bodenteils (2) eingesetzt wird, so dass in dem Bodenteil (2) Kanäle zum Leiten des Temperiermediums verlaufen.

3. Vorrichtung nach wenigstens einem der vorhergehenden Ansprüche,
**dadurch gekennzeichnet, dass**
sowohl das Zuführelement (32) von dem Zuführanschluss (34) als auch das Abführelement (36) von dem Abführanschluss (38) automatisiert trennbar sind.

4. Vorrichtung nach Anspruch 1 oder 3,
**dadurch gekennzeichnet, dass**
die Vorrichtung dazu eingerichtet ist, um die Trennung und/oder die Verbindung der Anschlüsse (34, 38) während oder durch eine Bewegung der einzelnen Blasstationen (1) und während eines speziellen Montagebetriebs der Anlage durchzuführen.

5. Vorrichtung nach wenigstens einem der vorhergehenden Ansprüche,
**dadurch gekennzeichnet, dass**
Ventileinrichtungen vorgesehen sind, welche bewirken, dass bei einem Trennen des Zuführelements (32) vom Zuführanschluss (34) und/oder des Abführelements (36) vom Abführanschluss (38) ein Auslaufen von Flüssigkeit aus dem Bodenteil (2) verhindert wird.

6. Vorrichtung nach Anspruch 1,
**dadurch gekennzeichnet, dass**
eine weitere Führungskurve (104) zum Einkoppeln des Zuführanschlusses (34) und des Abführanschlusses (38) vorgesehen ist.

7. Vorrichtung nach wenigstens einem der vorhergehenden Ansprüche,
**dadurch gekennzeichnet, dass**
das Temperiermedium dazu dient eine Innenwandung des Bodenteils (2) mit einer gewünschten Temperatur zu beaufschlagen und insbesondere zu kühlen.

8. Vorrichtung nach wenigstens einem der vorhergehenden Ansprüche,
**dadurch gekennzeichnet, dass**
die Vorrichtung wenigstens eine weitere Führungskurve (102) aufweist, um das Bodenteil (2) zu verriegeln und/oder zu entriegeln, wobei diese Führungskurve (102) gegenüber einem Bewegungspfad der einzelnen Blasstationen stationär angeordnet ist.

9. Vorrichtung nach Anspruch 8,
**dadurch gekennzeichnet, dass**
eine Führungskurve zum Verriegeln des Bodenteils (2) vorgesehen und eine weitere Führungskurve (102) zum Entriegeln, wobei diese Führungskurven gegenüber einem Bewegungspfad der einzelnen Blasstationen stationär angeordnet sind.

10. Vorrichtung nach wenigstens einem der vorhergehenden Ansprüche,
**dadurch gekennzeichnet, dass**
die Führungskurven (102, 104, 114) zustellbar sind, wobei hierzu jeweils Antriebseinrichtungen vorgesehen sind.

## Claims

1. An apparatus for forming plastic preforms into plastic containers, having at least one blowing station (1) which has a high cavity within which the plastic preforms can be expanded to form the plastic containers, the blowing station (1) having a base part (2) which bounds the cavity, and the base part (2) being arranged releasably on a carrier (6) by means of a fastening mechanism (12, 14, 16, 18),
wherein
the device has a feed connection (34) for feeding a flowable temperature control medium and a discharge connection (38) for discharging the flowable temperature control medium, as well as a feed element (32) for feeding the flowable medium to the feed connection (34) and a discharge element (36) for discharging the temperature control medium from the discharge connection (38), wherein at least the feed element (32) can be separated from the feed connection (34) or the discharge element (36) can be separated from the discharge connection (38) in an automated manner, wherein the feed element (32) and the discharge element (36) is arranged on a common carrier so that the media connections can be separated or connected by a movement of this common carrier,
wherein
the apparatus comprises a guide curve (114) for separating the feed element (32) from the feed connection (34) and/or for separating the discharge element (36) from the discharge connection (38).

2. The apparatus according to claim 1,
**characterized in that**
the tempering medium is used to temper the base part (2), so that channels for conducting the tempering medium run in the base part (2).

3. The apparatus according to at least one of the preceding claims,
**characterized in that**
both the feed element (32) can be automatically separated from the feed connection (34) and the discharge element (36) can be automatically separated from the discharge connection (38).

4. The apparatus according to claim 1 or 3,
**characterized in that**
the apparatus is adapted to perform the separation and/or the connection of the connections (34, 38) during or by a movement of the individual blowing stations (1) and during a specific assembly operation of the plant.

5. The apparatus according to at least one of the preceding claims,
**characterized in that**
valve devices are provided which cause liquid to be prevented from leaking out of the base part (2) when the feed element (32) is separated from the feed connection (34) and/or the discharge element (36) is separated from the discharge connection (38).

6. The apparatus according to claim 1,
**characterized in that**
a further guide curve (104) is provided for coupling the feed connection (34) and the discharge connection (38).

7. The apparatus according to at least one of the preceding claims,
**characterized in that**
the temperature control medium is used to apply a desired temperature to an inner wall of the base part (2) and in particular to cool it.

8. The apparatus according to at least one of the preceding claims,
**characterized in that**
the apparatus has at least one further guide curve (102) for locking and/or unlocking the base part (2), this guide curve (102) being arranged stationary relative to a movement path of the individual blowing stations.

9. The apparatus according to claim 8,
**characterized in that**
a guide curve is provided for locking the base part (2) and a further guide curve (102) for unlocking, these guide curves being arranged stationary with respect to a path of movement of the individual blowing stations.

10. The apparatus according to at least one of the preceding claims,
**characterized in that**
the guide curves (102, 104, 114) can be advanced, drive devices being provided for this purpose in each case.

## Revendications

1. Dispositif de façonnage de préformes en matière plastique en des récipients en matière plastique avec au moins une station de soufflage (1), lequel présente un espace creux haut, à l'intérieur duquel les préformes en matière plastique peuvent être expansées en les récipients en matière plastique, dans lequel la station de soufflage (1) présente une partie de fond (2), laquelle délimite l'espace creux et dans lequel la partie de fond (2) est disposée sur un support (6) de manière amovible au moyen d'un mécanisme de fixation (12, 14, 16, 18),
dans lequel
le dispositif présente un raccord d'amenée (34) destiné à amener un milieu thermorégulateur pouvant couler et un raccord d'évacuation (38) destiné à évacuer le milieu thermorégulateur pouvant couler, ainsi qu'un élément d'amenée (32) pour amener au raccord d'amenée (34) le milieu pouvant couler et un élément d'évacuation (36) pour évacuer le milieu thermorégulateur du raccord d'évacuation (38), dans lequel au moins l'élément d'amenée (32) peut être séparé de manière automatisée du raccord d'amenée (34) ou l'élément d'évacuation (36) peut être séparé de manière automatisée du raccord d'évacuation (38), dans lequel l'élément d'amenée (32) et l'élément d'évacuation (36) est disposé sur un support commun si bien que les raccords de milieu peuvent être séparés ou peuvent être reliés par un déplacement dudit support commun,
dans lequel
le dispositif présente une came de guidage (114) destinée à séparer l'élément d'amenée (32) du raccord d'amenée (34) et/ou destinée à séparer l'élément d'évacuation (36) du raccord d'évacuation (38).

2. Dispositif selon la revendication 1,
**caractérisé en ce que**
le milieu de thermorégulation est employé pour thermoréguler la partie de fond (2) de sorte que des canaux destinés à acheminer le milieu thermorégulateur s'étendent dans la partie de fond (2).

3. Dispositif selon au moins l'une quelconque des revendications précédentes,
**caractérisé en ce que**
à la fois l'élément d'amenée (32) et l'élément d'évacuation (36) peuvent être séparés de manière automatisée respectivement du raccord d'amenée (34) et du raccord d'évacuation (38).

4. Dispositif selon la revendication 1 ou 3,
**caractérisé en ce que**
le dispositif est mis au point pour effectuer la séparation et/ou la liaison des raccords (34, 38) pendant ou par un déplacement des diverses stations de soufflage (1) et pendant un mode de montage spécifique de l'installation.

5. Dispositif selon au moins l'une quelconque des revendications précédentes,
**caractérisé en ce que**
sont prévus des systèmes de soupape, lesquels ont pour effet que lors d'une séparation de l'élément d'amenée (32) du raccord d'amenée (34) et/ou de l'élément d'évacuation (36) du raccord d'évacuation (38), un échappement de liquide hors de la partie de fond (2) est empêché.

6. Dispositif selon la revendication 1,
**caractérisé en ce que**
une autre came de guidage (104) est prévue pour accoupler le raccord d'amenée (34) et le raccord d'évacuation (38).

7. Dispositif selon au moins l'une quelconque des revendications précédentes,
**caractérisé en ce que**
le milieu thermorégulateur sert à soumettre une paroi intérieure de la partie de fond (2) à l'action d'une température souhaitée et en particulier à la refroidir.

8. Dispositif selon au moins l'une quelconque des revendications précédentes,
**caractérisé en ce que**
le dispositif présente au moins une autre came de guidage (102) pour verrouiller et/ou déverrouiller la partie de fond (2), dans lequel ladite came de guidage (102) est disposée de manière stationnaire par rapport à un trajet de déplacement des diverses stations de soufflage.

9. Dispositif selon la revendication 8,
**caractérisé en ce que**
une came de guidage est prévue pour verrouiller la partie de fond (2) et une autre came de guidage (102) pour le déverrouillage, dans lequel lesdites cames de guidage sont disposées de manière stationnaire par rapport à un trajet de déplacement des diverses stations de soufflage.

10. Dispositif selon au moins l'une quelconque des revendications précédentes,
**caractérisé en ce que**
les cames de guidage (102, 104, 114) peuvent être approchées, dans lequel des systèmes d'entraînement sont respectivement prévus à cet effet.
